# EUROPEAN PATENT APPLICATION

(11) **EP 1 031 956 A1**
(43) Date of publication of application: **30.08.2000**
(21) Application number: 00830110.3
(22) Date of filing: 17.02.2000
(51) Int. Cl.: G09B 27/00, A63F 3/00

(54) **A device to obtain a personalised horoscope**

(30) Priority: 23.02.1999 IT AR990002
(71) Applicant: Futura 2000 S.R.L., 50122 Firenze (IT)
(72) Inventor: Magrini, Enza, 52010 Bibbiena (IT)
(74) Representative: Berneschi, Ciro

(57) **Abstract**

The invention consists of several basic charts, each one reproducing a sky chart on which are at least reproduced the planets placed in the position they occupy at the time the chart refers to; a personal chart which reproduces the sky chart on which there are at least the planets in the position they were in on the date of birth of the person whose horoscope is being cast; finally, a third chart with a set of fixed arrows placed at 0°, 60°, 90°, 120° and 180° which is placed as so to rotate over the personal chart which, in its turn, is placed over the basic chart relative to the period for which the astrological prediction is requested.

## Description

The invention relates to a device to obtain a personalised horoscope. It consists of several printed charts and one pointing chart with a set of fixed arrows on it, to be used by perfectly overlapping them one over the other.

In the prior art there are books that indicate the position of the planets on the sky chart on days of past years and the position they will be in in the future. There are also sky charts divided into twelve 30° sections, which correspond to the twelve constellations of the zodiac, each one marked with the corresponding sign or zodiac symbol, such as: Aries, Taurus, Gemini, Cancer, Leo, Virgo, Libra, Scorpio, Sagittarius, Capricorn, Aquarius, Pisces.

These charts are used by astrologers who, given the date of birth of the person who wishes to know the influence of the planets on her/his life and, therefore, the positions occupied on that date by the planets, can predict, by means of geometrical instruments, the variation of the influence of the planets on a person over time. That means they can predict the influence of the planets on a person's life and cast the astrological prediction. Numerous people involved in different fields of human activity frequently contact astrologers to receive predictions about their activities and about the positive or negative influence of the planets at certain times when they must meet commitments in the field in which they operate. However, it is really expensive and time consuming to consult and meet with experts.

The aim of the present invention is to create a device that will be personalised by the customer at first and then, through simple operations, will allow her/him to find the astrological prediction autonomously, at any time during the year and even daily, without having to meet with experts and consultants.

The invention which allows us to obtain said results consists of:
- several basic charts, one for each period one wishes to make a prediction for, each one reproducing the sky chart with, on it, at least the planets reproduced in the mean position they are in at the time the chart refers to;
- a personal chart, usually made of transparent material, reproducing the sky chart, with, on it, at least the planets reproduced in the position they were in on the date of birth of the person using said device to cast her/his own horoscope;
- a third chart with a set of fixed arrows placed at 0°, 60°, 90°, 120° and 180°, which rotates over the basic and personal charts, once they are placed the one on the other, perfectly overlapping. In this way, once the corresponding constellations of the two charts are overlapped by simply aiming the first arrow (pointer) is aimed at one of the planets on the personal chart, one can have the indication of the positive effects given by the Sextile and the Trigon arrows (60° and 120° arrows) and of the negative effects given by the Quadrature and Opposition arrows (90° and 180° arrows) deriving from the planets reproduced on the basic chart: the closer the planets are to the direction defined by the arrows aimed at them, the more intense are the positive and negative influences.

Said device can therefore allow anyone to cast his/her own horoscope, and learn the positive and negative effects the planets have on him/her at any period of time throughout the year to which the basic charts refer, by simply placing the chart relating to the chosen period of time, the personal chart and the chart with the set of fixed arrows one on top of the other, known as it is the influence of the planets in the various positions they can be in in relation to the direction of the arrows (Sextile, Trigon, Quadrature and Opposition), when the pointer is aimed in succession at the different planets of the personal chart.

The invention is described in detail herebelow, with reference to the preferred embodiment of the charts which are illustrated only as an example in the figures on the enclosed drawing, in which:

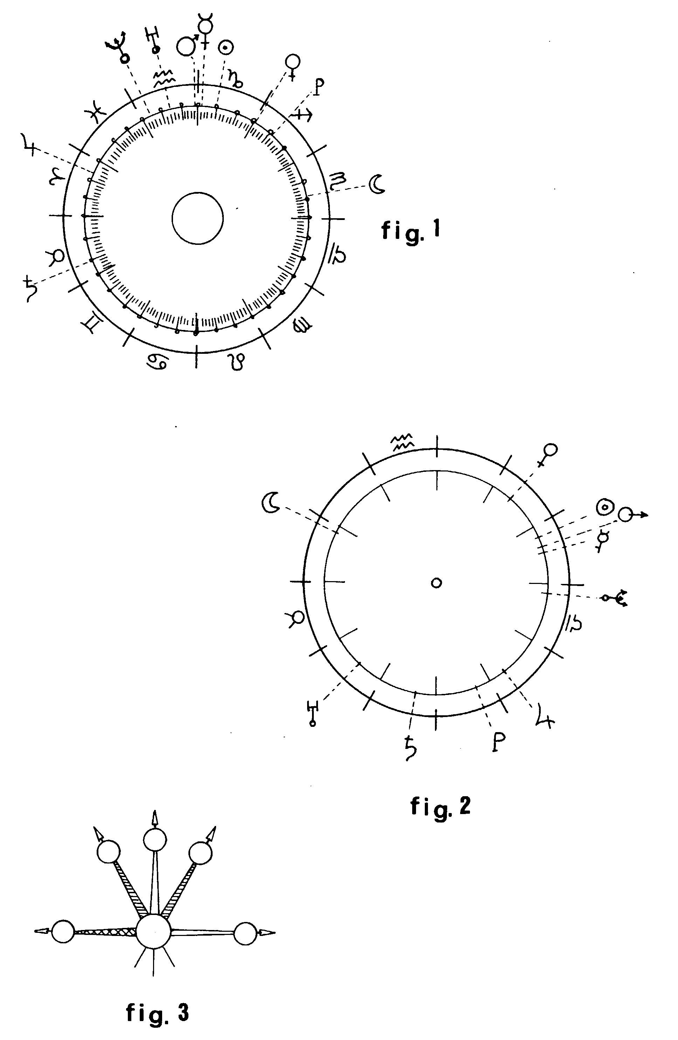

- fig. 1 exemplifies the basic chart, divided into 12 sections, each one divided into 30 degrees and marked by a sign of the zodiac, reproducing the planets in the positions they will be in on 2nd January 2000;
- fig. 2 exemplifies the personal chart, divided into twelve sections, reproducing the planets in the position they were in on 31 October 1944, the date of birth of the person who has bought the invention for personal use or for whom the horoscope for 2nd January 2000 is cast;
- fig. 3 represents the upper chart with the set of fixed arrows, the first of which (the pointer) is marked by crossed lines, the second and the fourth arrows, at 60° and 120° in relation to the first one, are marked by tight horizontal lines, the third and fifth arrows, at 90° and 180° in relation to the first one, are blank.

It is to be understood that the drawings are only given as an example to make the comprehension of the invention easier.

It, therefore, consists of a device by which any person can find the positive and negative influence the planets have on her/him in any period of time, usually during the days of the current year.

Said device consists of several basic charts that are used one at a time, each one representing the sky chart with on it at least the planets in the positions they are in at the time to which the basic chart refers.

Said basic charts are usually printed on paper of any thickness, from a thin sheet of a standard diary to a thicker sheet of construction type paper for manuals with removable sheets.

Each chart reproduces the sky chart divided into twelve parts, each one of 30°, each one defined by spoke-like lines, whose centre is the rotating point of the charts. Each one of these parts is usually divided into degrees, that means that on a circular crown of reference, in addition to the lines that divide the sky into 12 sections, there are also shorter lines like on a scale that are separated by a distance of a sixtieth of a degree one from the other. Furthermore, each one of the 12 sections is marked by the relative sign of the zodiac. At the centre, i.e. where the lines separating the twelve sections of the sky chart meet, there usually is a hole to make it easier to perfectly overlap the charts the device consists of as specified herebelow. The invention also includes the personal chart which has, on it, at least, reference signs that will be overlapped over the corresponding ones on the basic chart used for the prediction. On the personal chart the planets are reproduced in the position they were in on the date of birth of the user whose horoscope will be cast. Said personal chart is normally made of a transparent sheet, which can be of any thickness, in order to simplify the exact overlapping over the basic chart with which it interacts to determine the horoscope. That is to say that said personal chart is made of a transparent sheet, in order to make sure the corresponding signs on both the overlapped basic chart and personal chart are made to coincide, and also to make it easier to see the signs which represent the planets on the basic chart and to compare them with the corresponding ones on the same personal chart.

Furthermore, said personal chart usually has a central hole to make it easier to perfectly overlap the personal onto the basic chart and to rotate it around a pin to facilitate said positioning. Several rays arranged as a star are also normally placed on the personal chart. Said rays, which originate from the centre, divide the personal chart into twelve 30° parts, each one related to a different sign of the zodiac; these rays being also point of reference that aid in the correct overlapping over each basic chart. Finally, on some of these sections or parts the relative sign of the zodiac is reproduced to further help overlapping the personal chart over the basic chart. This way, overlapping the charts, it will be clear the difference between the positions of the corresponding planets on the basic chart, which refers to the day or period of time relevant for the horoscope, and on the personal chart, which reproduces the position they were in on the date of birth of the user for whom the horoscope is cast. Said two charts (the basic and personal charts), once placed in position with the corresponding reference points overlapped two by two, one over the other, will not be moved during the entire process by which the horoscope is cast. The third chart, or top chart, is then placed over the basic chart and the personal chart. This third chart is provided with the set of arrows departing from the centre of rotation and placed at 0°, 60°, 90°, 120°, and 180°, respectively representing the pointer, the sextile, the quadrature, the trigon and the opposition, and thus fixed one next to the other. During the operation, the chart on which they are reproduced is rotated until the first arrow, the pointer, is aimed in sequence at the different planets reproduced on the personal chart so as to see how the planets are placed on the basic chart in relation to the arrows following said pointer. Said top chart, with the arrows on it, is then rotated several times during the operation, in order to aim the pointer at the planets of the personal chart in sequence. To make the rotation of the third chart easier and at the same time to keep it on the same axis as the basic chart and the personal chart, said third chart is provided with means that keep the three overlapping charts in position. These means, that help the rotation and maintain the chart with the arrows in position could consist of a plain rivet or of a small knob with a pin, and can at least pass through the central hole of the personal chart, then point to the centre of the basic chart or also go through said centre hole, if there is one. However, when the invention is carried out these means can vary and/or can be substituted by equivalent ones. The above device therefore provides for the choice of the basic chart, among the ones by which the invention is equipped, for the day or the period of time (week or month) for which the horoscope needs to be predicted; the use of the personal chart, which never changes in time; their overlapping, by making all the corresponding reference signs, on both charts, perfectly meet one over the other, for example by making the section with the same sign of the zodiac on both the overlapped charts coincident; finally the application of the upper chart with its pointer sequentially aimed at the planets on the personal chart so as to see how the planets on the basic chart are positioned in relation to the positive arrows (normally blue), i.e. the 60° and the 120° arrows in relation to the pointer, and to the negative ones (usually red), i.e. the ones placed at 90° and 180° in relation to the pointer. Keens on astrology know that each planet carries specific influences on the different human fields of activity or interest. By moving the pointer towards all the planets on the personal chart one will have positive and negative influences of different entities, that the user, whose horoscope is being predicted, will have to evaluate in order to find the results of the algebraic sum in the field of her/his interest.

## Claims

1. A device to obtain a personalised horoscope, characterised by several basic charts, each one reproducing the sky chart and at least the planets in the positions they are in in the period of time the basic chart refers to, by a personal chart indicating at least the reference signs that have to be overlapped over the corresponding ones on the basic chart and the planets in the positions they were in on the date of birth of the user whose horoscope will be cast, and by a third chart with a set of fixed arrows on it that depart from the centre of rotation and are oriented at 0°, 60°, 90°, 120° and 180°, respectively representing the pointer, the sextile, the quadrature, the trigon and the opposition, and characterised by means provided for placing the basic chart, the personal chart and the upper chart perfectly overlapping, one over the other, with at least the upper chart, with the set of fixed arrows, capable of rotating over the two bottom charts.

2. The device, as claimed in claim 1, characterised by the fact that the basic charts are printed onto paper of any thickness.

3. The device, as claimed in claim 1, characterised by the fact that on each basic chart is reproduced a sky chart divided into twelve 30° sections, with lines departing from the centre of rotation of the charts like rays, and by the fact that each section is divided into degrees and reproduces the corresponding sign of the zodiac.

4. The device, as claimed in claim 1, characterised by the fact that it includes several basic charts, one for each day of the year to which the astrological predictions will refer.

5. The device, as claimed in claim 1, characterised by the fact that the personal chart is made of a transparent sheet of any thickness.

6. The device, as claimed in claim 1, characterised by the fact that the personal chart has a central hole for its rotation around a central pin to facilitate its positioning over each basic chart.

7. The device, as claimed in claim 1, characterised by the fact that on the personal chart are reproduced several rays arranged as a star which, departing from the centre of rotation, divide it into twelve 30° sections, the rays forming the reference points for its correct overlapping over each basic chart.

8. The device, as claimed in claim 1, characterised by the fact that the upper chart has means to place it over the personal chart and onto one of the basic charts, as well as means for it to rotate.

9. The device, as claimed in claim 1, characterised by the means for the rotation and the positioning of the chart with arrows over the other charts consisting of a rivet.

10. The device, as claimed in claim 1, characterised by the means for the rotation and the positioning of the chart with arrows over the other charts, consisting of a small knob and a pin that at least passes through the personal chart.
